# EUROPEAN PATENT APPLICATION

(11) **EP 4 693 663 A1**
(43) Date of publication of application: **11.02.2026**
(21) Application number: 24927596.7
(22) Date of filing: 12.12.2024
(51) Int. Cl.: H01M 50/262, H01M 50/282, H01M 50/383, H01M 50/342, B60L 50/64

(54) **BATTERY MODULE COVER AND BATTERY PACK, AND VEHICLE INCLUDING SAME**

(30) Priority: 12.06.2024 KR 20240076520
(71) Applicant: LG ENERGY SOLUTION, LTD., Seoul 07335 (KR)
(72) Inventor: JUNG, Ki Taek, Daejeon 34122 (KR)
(74) Representative: BCKIP Part mbB
(86) International application number: PCT/KR2024/020290
(87) International publication number: WO 2025/258769

(57) **Abstract**

A battery module cover including a cover panel formed by stacking a plurality of layers and having a venting part for venting gas or flames in a battery cell, and a fastening pin penetrating the cover panel at a point avoiding the venting part, being combined with a fixing part to provide a bonding force between the plurality of layers of the cover panel, and having an end extending toward a pack lid to support the pack lid, a battery pack, and a vehicle including the same are disclosed.

## Description

### [TECHNICAL FIELD]

The present disclosure relates to a battery module cover and a battery pack capable of effectively dealing with gas or flames generated in the event of a battery fire and preventing the structures of a battery pack or a battery module from being damaged due to gas or flames, thereby improving safety, and a vehicle including the same.

### [BACKGROUND ART]

Recently, technologies for reducing carbon are being actively developed to solve environmental problems such as abnormal temperatures. In order to reduce carbon, it is necessary to produce energy in an eco-friendly manner rather than producing energy using fossil fuels, store the produced energy in the form of electric energy, and use the stored electric energy in vehicles, various industrial sites, and homes.

In order to utilize electric energy for reducing carbon, the use of a battery that can store and extract electric energy is essential. Therefore, in order to sufficiently store electric energy and use the same without inconvenience, it is necessary to secure the performance of the battery.

Batteries mainly utilize the oxidation-reduction reaction of metal ions, high-density metal ions are used to increase the capacity, charge/discharge performance, and efficiency of a battery, and much research is being conducted on materials constituting electrolytes and solid electrolytes. However, as battery performance improves, there is a problem of decreased stability in general.

Batteries used in vehicles, industries, and homes are manufactured as physical units called packs. A battery pack performs functions of preventing fire from spreading to the outside in the event of an accident such as battery thermal runaway by embedding multiple battery cells inside a battery case and sealing the same, and protecting the internal battery cells from deterioration due to the influence of the external environment or damage due to physical factors.

Multiple battery cells are embedded in a battery pack in an intermediate form of a module or an assembly (cell module assembly (CMA)). In the case of a battery module or assembly, multiple battery cells are assembled into a single module or assembly, and multiple modules are fastened inside a pack case, thereby completing a battery pack. When servicing a battery, maintenance is made easy by allowing maintenance to be performed in units of such modules or assemblies.

Each of multiple unit battery cells constituting a module or assembly is composed of a positive electrode, a negative electrode, and an electrolyte. Since battery cells generate heat during charging and discharging, effective heat dissipation for the battery cells is required. In addition, from the perspective of battery modules, assemblies, and battery packs, design for efficient heat dissipation is necessary to prevent safety accidents.

Meanwhile, batteries may deteriorate due to manufacturing errors, excessive charging and discharging, and aging. If battery deterioration continues, it can eventually cause a fire. Therefore, it is necessary to prepare in advance to prevent a fire from occurring in batteries. To this end, it is important to continuously sense the status of a battery, recognize and respond to a problem when the problem has occurred, and it is necessary to minimize damage when an unexpected problem occurs.

If a battery deteriorates due to various causes, battery cells rapidly heat up, generating gas or flames, causing a thermal runaway phenomenon. If a thermal runaway occurs in one battery cell, a thermal propagation phenomenon in which gas or flames spread to adjacent battery cells or battery modules occurs in a chain.

If thermal propagation occurs in a specific battery cell or battery module, there is a risk that the structure of the entire battery module or battery pack can be easily damaged, and thus efforts to prevent gas or flames generated during thermal runaway or to delay thermal propagation as much as possible are required for battery efficiency and safety.

The matters described as background technology above are only intended to enhance understanding of the background of the present disclosure and should not be taken as an acknowledgment that they correspond to prior art already known to those skilled in the art.

### [DETAILED DESCRIPTION OF INVENTION]

### [TECHNICAL PROBLEMS]

An object of the present disclosure proposed to solve such problems is to provide a battery module cover and a battery pack having improved battery safety by smoothly discharging gas generated when a thermal runaway occurs in a specific battery cell or battery module, preventing spread of flames to adjacent battery cells or battery modules, and at the same time, preventing the battery module or battery pack from being structurally damaged in a high temperature or high pressure environment caused by the thermal runaway, and a vehicle including the same.

The technical objects to be achieved in the present disclosure are not limited to the technical objects mentioned above, and other technical objects not mentioned will be clearly understood by those skilled in the art to which the present disclosure belongs from the description below.

### [TECHNICAL SOLUTION]

A battery module cover according to the present disclosure to achieve the aforementioned object includes a cover panel formed by stacking a plurality of layers and having a venting part for venting gas or flames in a battery cell, and a fastening pin penetrating the cover panel at a point avoiding the venting part, being combined with a fixing part to provide a bonding force between the plurality of layers of the cover panel, and having an end extending toward a pack lid to support the pack lid.

In the battery module cover according to the present disclosure, the pack lid may have a fireproof cover bonded to a lower side of the pack lid facing the inside of a battery pack, and the end of the fastening pin penetrating the cover panel and combined with the fixing part may extend toward the fireproof cover to support the fireproof cover.

In the battery module cover according to the present disclosure, the fixing part may be located on the outside of the cover panel and combined with the fastening pin penetrating the cover panel such that the cover panel is in close contact between the fixing part and the fastening pin.

In the battery module cover according to the present disclosure, a plurality of fastening pins may be provided to be spaced apart from each other at points avoiding the venting part, and an end of each fastening pin may come into contact with the inside of the pack lid to support the pack lid.

In the battery module cover according to the present disclosure, one end of the fastening pin may protrude to a point between the cover panel and the battery cell in a state in which the one end is inserted into the inside of the cover panel, and may be covered with an insulating adhesive.

In the battery module cover according to the present disclosure, the fastening pin may be a bolt and the fixing part may be a nut.

In the battery module cover according to the present disclosure, a plurality of fixing parts may be provided on both sides of the cover panel, and the fastening pins penetrating the cover panel may be combined with the plurality of fixing parts.

In the battery module cover according to the present disclosure, the fixing parts may be bonded to the ends of the fastening pins penetrating the cover panel to support the pack lid.

In the battery module cover according to the present disclosure, a plurality of venting parts may be formed to be spaced apart from each other in the cover panel, the fastening pins may be positioned between the plurality of venting parts.

In the battery module cover according to the present disclosure, the plurality of venting parts formed in the cover panel may include outermost venting parts formed adjacent to an edge of the cover panel, and a plurality of fastening pins may be provided at points outside the outermost venting parts.

In the battery module cover according to the present disclosure, the fixing part may be positioned between the cover panel and the battery cell and combined with the fastening pin penetrating the cover panel from the outside of the cover panel, thereby providing a bonding force between the plurality of layers of the cover panel.

In the battery module cover according to the present disclosure, the fastening pin penetrating the cover panel may be combined with the fixing part on the inside of the cover panel, and the fastening pin and the fixing part may be covered with an insulating adhesive.

In the battery module cover according to the present disclosure, the fixing part may be disposed on the inside of the cover panel and covered with an insulating adhesive while being combined with an end of the fastening pin penetrating the cover panel.

In the battery module cover according to the present disclosure, the cover panel may be formed by sequentially stacking a fireproof layer, a base layer, a flame-retardant layer, and a support layer from the inside facing the battery cell toward the outside of the cover panel.

In the battery module cover according to the present disclosure, the venting part may include a first hole formed in the fireproof layer, a second hole formed in the base layer at a position corresponding to the first hole, a provisional cut line formed in the flame-retardant layer at a position corresponding to the second hole, and a third hole formed in the support layer a position corresponding to the provisional cut line.

In the battery module cover according to the present disclosure, the third hole of the support layer may be larger in size than the provisional cut line of the flame-retardant layer.

In the battery module cover according to the present disclosure, the provisional cut line of the flame-retardant layer may be larger in size than the second hole of the base layer.

In the battery module cover according to the present disclosure, the provisional cut line of the flame-retardant layer may be cut and opened when gas or flames are generated inside a battery module to form a venting hole.

In the battery module cover according to the present disclosure, the first hole, the second hole, the third hole, and the provisional cut line constituting the venting part may be formed in the same shape.

A battery pack according to the present disclosure includes the aforementioned battery module cover.

A vehicle according to the present disclosure includes the aforementioned battery pack.

### [EFFECT OF INVENTION]

According to the battery module cover, the battery pack, and the vehicle including the same of the present disclosure, when a fire occurs in a specific battery cell or battery module, gas caused by the fire can be smoothly discharged, and spread of flames to adjacent battery cells or battery modules can be prevented, and structural damage of a battery module or battery pack due to high temperature or high pressure can be prevented, thereby improving safety inside the battery pack.

The effects obtained from the present disclosure are not limited to the effects mentioned above, and other effects not mentioned can be clearly understood by those skilled in the art to which the present disclosure belongs from the description below.

### [BRIEF DESCRIPTION OF THE DRAWING]

FIG. 1 is an exploded view of a battery module cover according to an embodiment of the present disclosure.
FIG. 2 is a cross-sectional view of the battery module cover illustrated in FIG. 1 coupled to a battery module.
FIG. 3 is an enlarged view of part A illustrated in FIG. 2.
FIGS. 4 and 5 are cross-sectional views of a battery module cover according to another embodiment of the present disclosure.
FIG. 6 is a cross-sectional view of a cover panel of the battery module cover illustrated in FIG. 1.
FIG. 7 is a view showing a relationship between the battery module cover illustrated in FIG. 1 and a battery pack lid.
FIG. 8 is a view showing a state in which the battery module cover illustrated in FIG. 1 is coupled to a battery module.
FIG. 9 is a view showing a battery pack and a vehicle to which the battery module cover illustrated in FIG. 1 is applied.

### [BEST MODE FOR CARRYING OUT THE INVENTION]

In the following description, a detailed description of known functions and configurations incorporated herein will be omitted when it may obscure the subject matter of the present disclosure. The same reference numbers will be used in the drawings to refer to the same or like parts. In addition, the attached drawings are only intended to facilitate easy understanding of the embodiments disclosed in this specification, and the technical ideas disclosed in this specification are not limited by the attached drawings, and should be understood to include all modifications, equivalents, or substitutes included in the spirit and technical scope of the present disclosure.

Although terms such as, for example, "first" and "second" may be used to describe various elements, these terms are merely used to distinguish the same or similar elements from each other. The aforementioned terms are used solely to distinguish one component from another.

An element described in the singular form is intended to include a plurality of elements unless the context clearly indicates otherwise.

In the present specification, the term "comprise" or "include" is intended to specify the presence of a described feature, number, step, operation, component, part, or a combination thereof, but should be understood as not excluding in advance the possibility of the presence or addition of one or more other features, numbers, steps, operations, components, parts, or combinations thereof.

The suffixes "module" and "unit" of elements used in the following description are used for convenience of description and thus can be used interchangeably and do not have any distinguishable meanings or functions.

When a component is "coupled" or "connected" to another component, it should be understood that a third component may be present between the two components although the component may be directly coupled or connected to the other component. When a component is "directly coupled" or "directly connected" to another component, it should be understood that no element is present between the two components.

Hereinafter, embodiments disclosed in this specification will be described in detail with reference to the attached drawings. Regardless of the drawing symbols, identical or similar components will be given the same reference numerals and redundant descriptions thereof will be omitted.

A battery is made up of several battery cells 900 that form a single battery module 700, and multiple battery modules 700 are assembled into a battery pack BP that is installed in a vehicle V. The battery cell 900, which is a basic unit of a battery, deteriorates due to various causes such as design errors, excessive charging or discharging, and external impacts. If such deterioration continues, a thermal runaway in which the battery cell 900 ignites by itself and emits gas or flames occurs. If a thermal runaway occurs, thermal propagation in which flames spread to adjacent battery cells 900 or battery modules 700 occurs in a chain, which may lid to a fire in the entire battery.

Meanwhile, in the case of a battery pack lid 500 that closes an open side of the battery pack BP, a fireproof cover 520 is bonded to the lower side facing the battery pack BP in order to prepare for gas or flames generated in the event of thermal runaway in a specific battery cell 900 or battery module 700. In the case of the battery pack BP, when thermal runaway occurs, the battery pack lid 500 expands due to gas or flames, but the fireproof cover 520 bonded to the battery pack lid 500 does not expand together, and thus the fireproof cover 520 may be separated from the battery pack lid 500 in an abnormal environment created in the event of thermal runaway, causing structural damage of the battery pack BP, the battery module 700, or the battery pack lid 500.

Therefore, it is necessary to prevent structural damage of the battery pack BP, the battery module 700, or the battery pack lid 500 through a method such as supporting the fireproof cover 520 bonded to the bottom of the battery pack lid 500 such that the fireproof cover 520 bonded to the bottom of the battery pack lid 500 is not separated from the battery pack lid 500 due to highpressure gas or high-temperature flames generated during thermal runaway.

Therefore, in the battery pack lid 500 mentioned in the present disclosure, the fireproof cover 520 is bonded to the bottom of the battery pack lid 500 in the direction toward the inside of the battery pack BP, and is supported by a fastening pin 300 that supports the battery pack lid 500. As a result, the fact that the battery pack lid 500 is supported by the fastening pin 300 in the present disclosure should be interpreted as meaning that even in the event of thermal runaway, the fireproof cover 520 is prevented from being separated from the battery pack lid 500 to prevent the battery pack lid 500 from being structurally damaged.

In addition, in the present disclosure, various types of battery pack lids 500, such as a battery pack lid 500 without having the fireproof cover 520 and a battery pack lid 500 including a component that can be separated from the battery pack lid 500 that expands during thermal runaway as well as the battery pack lid 500 having the fireproof cover 520 bonded thereto, may be adopted as the battery pack lid 500 supported by the fastening pin 300 as long as they can prevent the structural damage of the battery pack BP, the battery module 700, or the battery pack lid 500.

Meanwhile, when thermal runaway occurs in a specific battery cell 900, it is important to smoothly discharges gas and prevents flames from spreading to adjacent battery cells 900 or battery module 700. In addition, it is also necessary to prevent the structure of the battery pack lid 500 or the battery module cover constituting the battery from being damaged in a high temperature or high pressure environment created by thermal runaway.

The battery module 700 mentioned in the present disclosure means a unit assembly containing a plurality of battery cells 900, and includes all unit assemblies of a plurality of battery cells 900 including not only a module 700 that assembles battery cells 900 in the form of a housing or case, but also an assembly in which battery cells 900 are assembled in the form of a strap or frame.

Conventionally, a fireproof cover 520 provided on the inside of the battery pack lid 500 is bonded to the battery pack lid 500 through an adhesive. Therefore, in a high temperature or high pressure environment created by thermal runaway occurring in a specific battery cell 900 or battery module 700, the adhesive easily melts, causing the fireproof cover 520 to separate from the battery pack lid 500 and sag or collapse. If the battery pack lid 500 is structurally damaged in this way, the gas generated due to thermal runaway cannot be discharged smoothly, and spread of flames to adjacent battery modules 700 or battery cells 900 cannot be prevented. Therefore, it is necessary to prevent the structural damage of the battery pack lid 500.

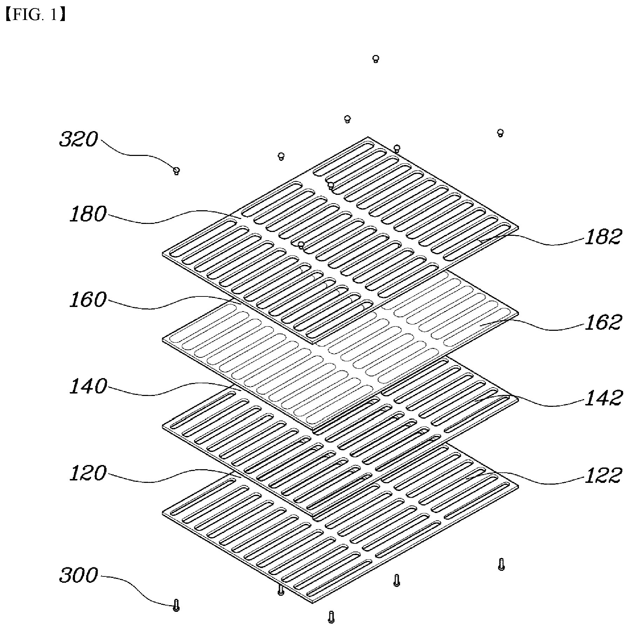

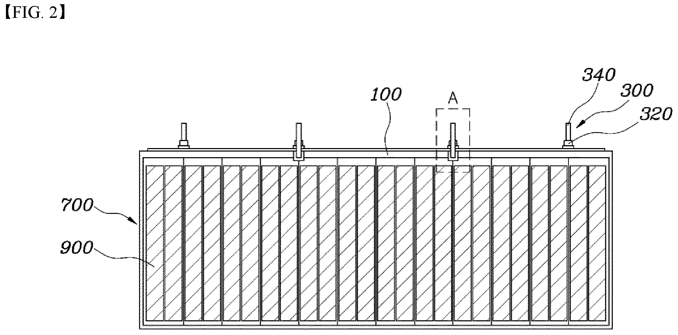

The present disclosure proposes a battery module cover including a cover panel 100, a fastening pin 300, and a fixing part 320 which are combined as shown in FIGS. 1 and 2, in which the inner side of the battery pack lid 500 is supported by the fastening pin 300 and the fixing part 320, thereby preventing the fireproof cover 520 of the battery pack lid 500 from being separated or sagging even in the event of thermal runaway, and preventing structural damage of the battery pack lid 500. In addition, the present disclosure proposes a battery module cover in which gas generated due to thermal runaway is smoothly discharged through a venting part 110 formed in the cover panel 100, and a fireproof layer 120 is included in a plurality of layers 120, 140, 160, and 180 constituting the cover panel 100, thereby preventing or minimizing spread of flames even if thermal runaway occurs in an adjacent battery cell 900 or battery module 700.

Specifically, the present disclosure includes the cover panel 100 and the fastening pin 300 as shown in FIGS. 1 and 2. The cover panel 100 is formed by stacking the plurality of layers 120, 140, 160, and 180, and the venting part 110 is formed in the cover panel 100 to discharge gas or flames generated during thermal runaway in the battery cell 900. The fastening pin 300 penetrates the cover panel 100 at a point avoiding the venting part 110 of the cover panel 100 and is combined with the fixing part 320 to provide a bonding force between the layers 120, 140, 160, and 180 of the cover panel 100, and the end 340 of the fastening pin 300 extends toward the pack lid 500 to support the pack lid 500.

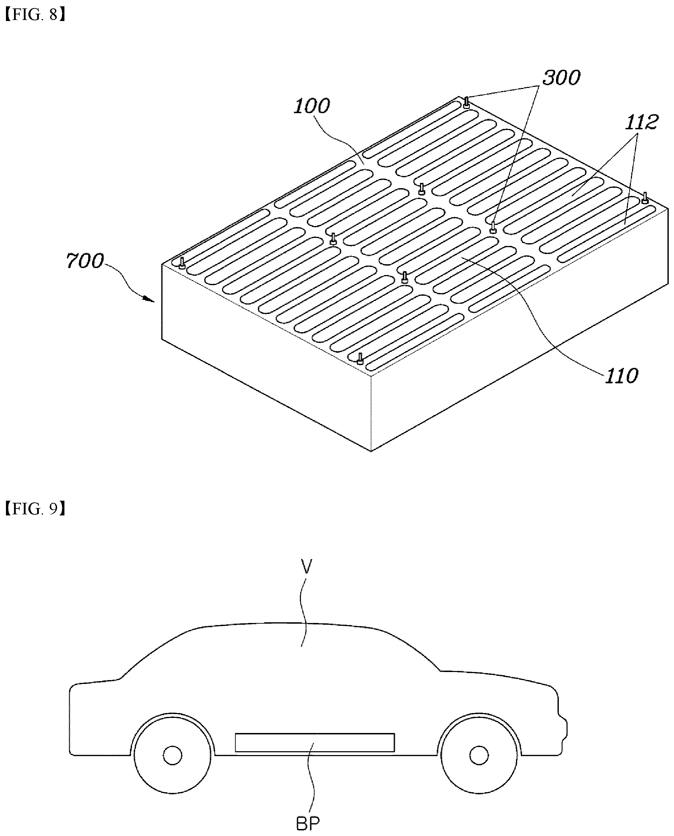

In the case of the battery module cover of the present disclosure, as shown in FIG. 1 or FIG. 8, gas generated during thermal runaway can be effectively discharged through the venting part 110 of the cover panel 100, and the cover panel 100 is composed of the multiple layers 120, 140, 160, and 180 and thus has fire resistance and prevents spread of flames. In addition, the bonding strength of the cover panel 100 is improved through the fastening pin 300 and the fixing part 320, and at the same time, the end 340 of the fastening pin 300 comes into contact with the inside of the battery pack lid 500 to support the battery pack lid 500, thereby preventing the battery pack lid 500 from being structurally damaged and allowing gas or flames to be discharged smoothly.

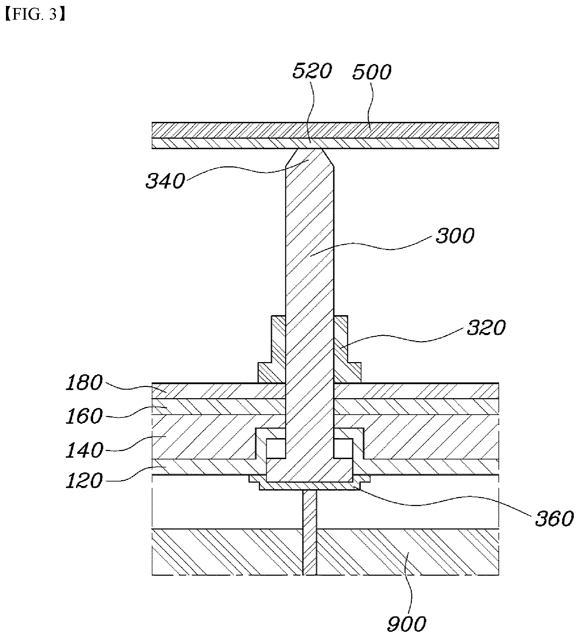

The fastening pin 300 may be formed of a material having rigidity sufficient to penetrate the cover panel 100 composed of the multiple layers 120, 140, 160, and 180 as illustrated in FIG. 3, and the fastening pin 300 can increase the bonding force between the multiple layers 120, 140, 160, and 180 by being combined with the fixing part 320 while penetrating the cover panel 100. The fastening pin 300 may be a bolt, and the fixing part 320 may be a nut.

The fastening pin 300 may be described as a bolt and the fixing part 320 may be described as a nut in the present disclosure and figures, but this is only an example to aid in understanding, and the fastening pin 300 and the fixing part 320 are not limited to a bolt and a nut if the fastening pin 300 can penetrate the cover panel 100 to increase the bonding force between the multiple layers 120, 140, 160, and 180 and the end 340 of the fastening pin 300 supports one side of the battery pack lid 500 to prevent structural damage.

The cover panel 100 is composed of the multiple layers 120, 140, 160, and 180 as shown in FIG. 1 or FIG. 8, and the venting part 110 is formed in the layers 120, 140, 160, and 180. The venting part 110 is a component for discharging gas or flames generated in the event of thermal runaway in a specific battery cell 900 or battery module 700. Normally, the venting part 110 is closed to prevent flames from an adjacent battery cell 900 or battery module 700, but it is opened to form a venting hole in the event of thermal runaway in the battery cell 900 or battery module 700.

In order for the venting part 110 to smoothly form venting holes in the event of thermal runaway, the fastening pin 300 needs to be provided at a point avoiding the venting part 110 of the cover panel 100, as shown in FIG. 8. In addition, if the fastening pin 300 is a conductor such as a bolt and the fixing part 320 is a conductor such as a nut, the fastening pin 300 or the fixing part 320 may be located between the cover panel 100 and the battery cell 900, which may cause damage such as a short circuit.

In order to prevent risks such as short circuits, it is important to insulate an exposed portion of the fastening pin 300. Specifically, in the present disclosure, the fastening pin 300 is inserted from the direction toward the battery cell 900 toward the outside of the cover panel 100 to penetrate the cover panel 100 and the fixing part 320 is combined with the fastening pin 300 on the outside of the cover panel 100 such that the cover panel 100 is in close contact between the fixing part 320 and the fastening pin 300. In this case, since the fastening pin 300 is positioned between the battery cell 900 and the cover panel 100 as shown in FIG. 3, one end of the fastening pin 300 protrudes to a point between the cover panel 100 and the battery cell 900 while being inserted into the inside of the cover panel 100. Since the fastening pin 300 may be a conductor such as a bolt, it is important to secure electrical insulation by covering the protruding end of the fastening pin 300 using an insulating adhesive 360 such as an insulating sticker to prevent a short circuit.

The insulating adhesive 360 illustrated in FIGS. 3 to 5 may be in the form of an adhesive such as a sticker that covers the fastening pin 300 or the fixing part 320 which is a conductor, and needs to be formed of a material that does not lose adhesive strength even in a high temperature or high pressure environment created during thermal runaway. In addition to an adhesive such as a sticker, it is possible to prevent an electrical short circuit of the fastening pin 300 or the fixing part 320 through various methods as long as it is possible to secure electrical insulation for the fastening pin 300 or the fixing part 320, which is a conductor, without losing insulation even in gas or flame generated during thermal runaway.

The end 340 of the fastening pin 300 after being combined with the fixing part 320 while penetrating the cover panel 100 is supported on the inside of the battery pack lid 500 as shown in FIGS. 3 to 5. The fireproof cover 520 is provided on the inside of the battery pack lid 500, and the fireproof cover 520 is formed of mica material and thus has an insulating effect. Therefore, it is not essential to provide the insulating adhesive 360 on the end 340 of the fastening pin 300 supported on the inside of the battery pack lid 500. However, depending on the case, such as when the composition of the material of the inside of the battery pack lid 500 is different, the end 340 of the fastening pin 300 supporting the battery pack lid 500 may also need to secure electrical insulation through the insulating adhesive 360.

In order to smoothly discharge gas or flames generated in the event of thermal runaway in a specific battery cell 900 or battery module 700, a plurality of venting parts 110 is formed to be spaced apart from each other in the battery module cover as shown in FIG. 8, and the fastening pin 300 needs to be formed at points avoiding the venting parts 110 so as not to interfere with the function of the venting parts 110.

In the present disclosure, in order to prevent the battery pack lid 500 from being structurally damaged in the event of thermal runaway, a plurality of fastening pins 300 supporting the battery pack lid 500 may be provided as shown in FIG. 8, and even when the plurality of fastening pins 300 is formed, they need to be formed to be spaced apart from each other at points avoiding the venting parts 110. In addition, the end 340 of each fastening pin 300 needs to be in contact with the inside of the battery pack lid 500 to support the battery pack lid 500 such that the battery pack lid 500 does not collapse or melt even in a high temperature or high pressure environment due to thermal runaway.

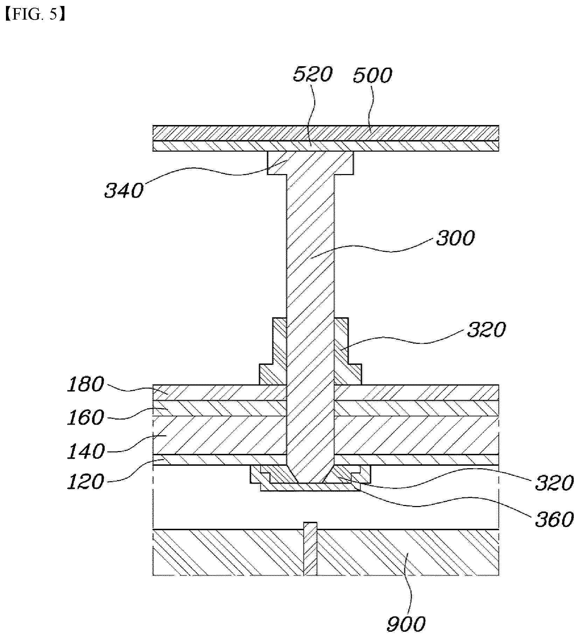

The fastening pins 300 can increase the bonding force between the multiple layers 120, 140, 160, and 180 of the cover panel 100 by being combined with the fixing parts 320. The fastening pins 300 may be combined with the multiple fixing parts 320 as shown in FIG. 5, and when a plurality of fixing parts 320 is provided on both sides of the cover panel 100, the fastening pins 300 may be combined with the fixing parts 320 on both sides of the cover panel 100. By providing a plurality of fixing parts 320 and combining the same with the fastening pins 300, the cover panel 100 composed of the plurality of layers 120, 140, 160, and 180 can be more firmly bonded and fixed, thereby increasing the durability of the battery module cover. Further, since the fastening pins 300 are combined with the plurality of fixing parts 320, the fastening pins 300 can effectively support the battery pack lid 500 without being disturbed by physical impact.

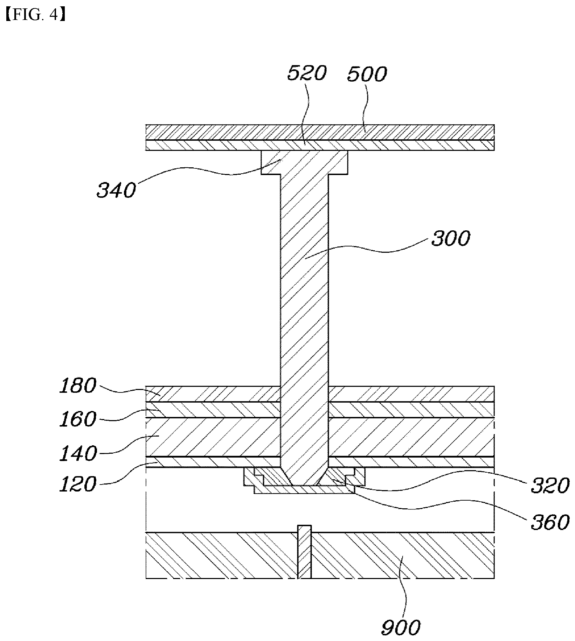

Further, although the battery pack lid 500 may be supported through the end 340 of the fastening pin 300 combined with the fixing part 320, as shown in FIG. 3, the fixing part 320 may be combined with the end 340 of the fastening pin 300 as shown in FIG. 4 or FIG. 5 when the fastening pin 300 is short. In this case, the battery pack lid 500 can be supported by the fixing part 320 in a state in which the fastening pin 300 and the fixing part 320 are combined with each other. Even if the fixing part 320 is a nut made of a metal, the fixing part 320 is supported by being in contact with the insulating fireproof cover 520 provided on the inside of the battery pack lid 500, and thus the separate insulating adhesive 360 does not need to be bonded thereto. However, in some cases, the fixing part 320 in contact with the battery pack lid 500 may need to be provided with electrical insulation.

In order to effectively discharge gas or flames generated during thermal runaway occurring in a specific battery cell 900 or battery module 700, the venting part 110 is provided in the cover panel 100, and a plurality of venting parts 110 may be formed to be spaced apart from each other in the cover panel 100 as shown in FIG. 1 or FIG. 8. In this case, the fastening pins 300 need to be designed so as not to interfere with the venting parts 110 for discharging gas or flames generated during thermal runaway by being positioned between the plurality of venting parts 110.

Referring to FIG. 8, the plurality of venting parts 110 formed in the cover panel 100 may include outermost venting parts 112 formed adjacent to corner points of the cover panel 100, and a plurality of fastening pins 300 may be provided on outer points closer to the corner points than the outermost venting parts 112. In the event of thermal runaway in a specific battery cell 900 or battery module 700, damage due to gas or flames may occur largely at the center of the battery module cover, whereas relatively less damage may occur at the outer edge of the battery module cover. Therefore, by arranging the fastening pins 300 on the outside of the outermost venting parts 112 where damage is relatively less likely to occur in the event of thermal runaway, the fastening pins 300 can stably support the battery pack lid 500 even if thermal runaway occurs, thereby preventing or minimizing the structural damage of the battery pack lid 500.

As illustrated in FIG. 8, by additionally arranging the fastening pins 300 at the center of the battery module cover, the bonding strength of the battery module cover can be increased, and damage to the battery pack lid 500 in a high temperature or high pressure environment created in the event of thermal runaway can be more effectively prevented. In this case, the fastening pins 300 need to be provided at points avoiding the plurality of venting parts 110 formed in the cover panel 100 of the battery module cover such that gas or flames generated due to thermal runaway can be smoothly discharged through the space between the battery pack lid 500 supported by the fastening pins 300 and the battery module cover.

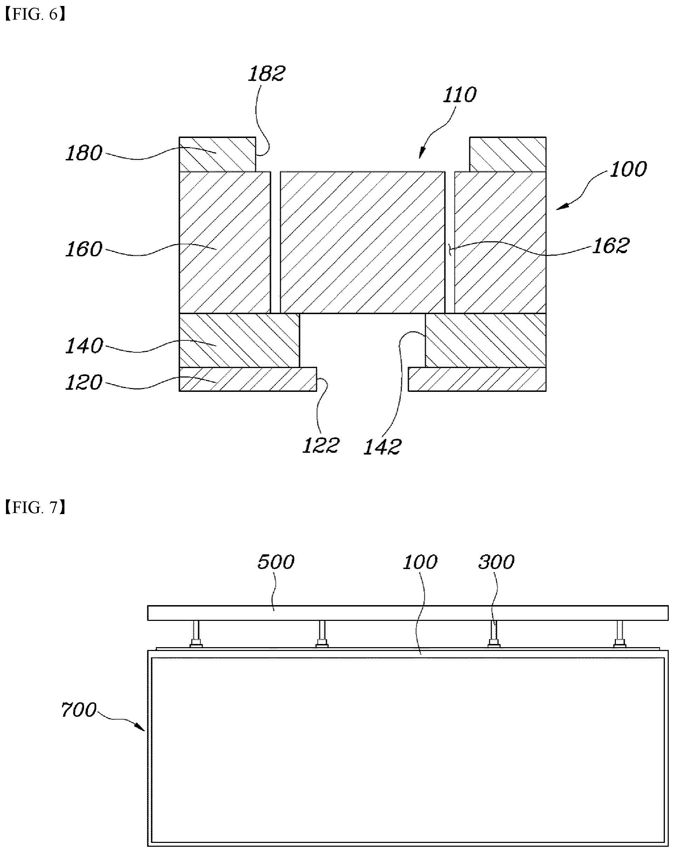

When the fastening pins 300 penetrate the cover panel 100 and come into contact with the inside of the battery pack lid 500 to support the battery pack lid 500, it is desirable that the fastening pins 300 have the same length as shown in FIG. 2 or FIG. 7. If the fastening pins 300 do not have the same length, the battery pack lid 500 may be lifted or tilted during thermal runaway, thereby reducing the assembly stability between the battery pack lid 500 and the pack case. Therefore, it is advantageous in terms of durability and assembly stability to make the fastening pins 300 constituting the battery module cover of the present disclosure have the same length. However, in the case of the present disclosure applicable to battery pack lids 500 of various shapes, fastening pins 300 having various lengths may be provided and applied to individual battery pack cases depending on situations.

The fixing part 320 of the present disclosure may be positioned between the cover panel 100 and the battery cell 900 on the inside of the cover panel 100 as shown in FIG. 4. In this case, the fixing part 320 is combined with the fastening pin 300 that penetrates the cover panel 100 from the outside of the cover panel 100 on the inside of the cover panel 100, thereby providing a bonding force between the multiple layers 120, 140, 160, and 180 of the cover panel 100. If the fixing part 320 is a conductor such as a nut, damage such as a short circuit may occur at a point between the battery cell 900 and the cover panel 100, and thus it is preferable to cover the fixing part 320 and the fastening pin 300 located on the inside of the cover panel 100 with the insulating adhesive 360 to secure electrical insulation.

Even when the fixing part 320 is provided on the inside of the cover panel 100 as shown in FIG. 4, if the fastening pin 300 is short, the fixing part 320 may be combined with the end 340 of the fastening pin 300. In this case, if the fastening pin 300 and the fixing part 320 are conductors such as a bolt and a nut, electrical insulation is required. However, since the end 340 of the fastening pin 300 is combined with the fixing part 320 inside the fixing part 320, damage such as a short circuit can be prevented by covering the fixing part 320 located between the battery cell 900 and the cover panel 100 with the insulating adhesive 360.

If the fixing part 320 is located on the inside of the cover panel 100 and the fastening pin 300 extends to the inside of the cover panel 100 even after being combined with the fixing part 320, the fastening pin 300 may be exposed between the cover panel 100 and the battery cell 900 while being combined with the fixing part 320. This can be considered in the case in FIG. 4 where the fastening pin 300 extends past the fixing part 320 toward the battery cell 900. In this case, since the end of the fastening pin 300 exposed after being combined with the fixing part 320 need to be electrically insulated, it is preferable to cover the same with the insulating adhesive 360 together with the fixing part 320. In addition, the other end 340 of the fastening pin 300 located on the outside of the cover panel 100 need to be in contact with the inside of the battery pack lid 500 to support the battery pack lid 500, thereby preventing the battery pack lid 500 from melting or being damaged due to thermal runaway. In this case, since the insulating fireproof cover 520 is bonded to the inside of the battery pack lid 500, separate insulation is not essential for the other end 340 of the fastening pin 300, but depending on the situation, electrical insulation using the insulating adhesive 360 or the like may be required therefor.

The cover panel 100 constituting the battery module cover of the present disclosure is composed of the plurality of layers 120, 140, 160, and 180 as shown in FIG. 1, and the plurality of layers 120, 140, 160, and 180 is formed by sequentially stacking a fireproof layer 120, a base layer 140, a flame-retardant layer 160, and a support layer 180 from the inner side facing the battery cell 900 toward the outer side of the cover panel 100.

As shown in FIGS. 3 to 5, the fireproof layer 120 is formed on the innermost side of the cover panel 100 closest to the battery cell 900, thereby preventing the structure of the cover panel 100 from easily melting or being damaged by flames generated during thermal runaway occurring in the battery cell 900. Therefore, the fireproof layer 120 may be formed of a material that is heat-resistant and fire-resistant, and it is preferable to form the fireproof layer 120 using mica, which has insulation, is easy to form, and has excellent fireproof properties among fire-resistant materials.

The base layer 140 is a component that is formed on the outer side of the fireproof layer 120 to form the basic frame of the cover panel 100, as shown in FIGS. 3 to 5, and may be formed of a metal material having strength to prepare for situations such as impacts inside and outside the battery. The base layer may be formed of aluminum, which is excellent in durability and easy to form among metals.

Referring to FIGS. 3 to 5, a flame-retardant layer 160 is combined with the outer side of the base layer 140. The flame-retardant layer 160 is formed by combining a heat-resistant material and silicon, and is combined with the outer side of the base layer 140 to effectively prevent thermal propagation from an adjacent battery cell 900 or battery module 700. In addition, since a heat-resistant material is added to the flame-retardant layer 160, the phenomenon of damage to the battery module cover due to flames generated during thermal runaway occurring in the internal battery cell 900 can be minimized.

The cover panel 100 is formed by bonding the support layer 180 to the outermost side as shown in FIGS. 3 to 5. The support layer 180 is bonded to the outer side of the flame-retardant layer 160 to prevent carbonization by flame, thereby preventing or delaying the base layer 140 formed of aluminum material from melting due to flames caused by thermal runaway. That is, the support layer 180 prevents the basic frame of the cover panel 100 from being damaged and prevents the cover panel 100 from being lifted in a high temperature or high pressure environment created during thermal runaway, thereby increasing the bonding strength of the cover panel 100. Therefore, the support layer 180 may be formed of a stainless steel (SUS) material that is durable, heat-resistant, and corrosion-resistant.

In the cover panel 100, the venting part 110 is formed as shown in FIG. 1 or FIG. 8 such that gas or flames generated during thermal runaway can be smoothly discharged to the outside. Therefore, in the cover panel 100 composed of the plurality of layers 120, 140, 160 and 180 according to the present disclosure, the venting part 110 is formed in each of the layers 120, 140, 160, and 180 as shown in FIG. 1. The venting part 110 includes a first hole 122 formed in the fireproof layer 120, a second hole 142 formed in the base layer 140 at a position corresponding to the first hole 122, a provisional cut line 162 formed in the flame-retardant layer 160 at a position corresponding to the second hole 142, and a third hole 182 formed in the support layer 180 at a position corresponding to the cut line 162.

Unlike other layers 120, 140 and 180 as shown in FIG. 1, the flame-retardant layer 160 has the venting part 110 formed as the provisional cut line 162 rather than a hole. Since the venting part 110 of the cover panel 100 is normally closed to prevent flames from an adjacent battery cell 900 or battery module 700 from reversely spreading to the battery module 700, and only when there is a thermal runaway in the battery cell 900, is opened to discharge the gas or flame generated in the battery cell 900, the venting part 110 of the flame-retardant layer 160 is formed as the provisional cut line 162, such that thermal propagation is prevented normally, and the provisional cut line 162 is cut and opened only when there is a thermal runaway in the battery cell 900, thereby enabling gas or flames to be discharged smoothly.

In addition, as illustrated in FIGS. 3 to 5, in order to minimize the phenomenon of gas or flames flowing back into the interior during thermal runaway in an adjacent battery cell 900 or battery module 700 and to facilitate discharge of gas or flames generated during thermal runaway in the battery cell 900, the venting parts 110 provided in the layers 120, 140, 160, and 180 may be formed to have different sizes. That is, the third hole 182 of the support layer 180 may be formed to be larger than the provisional cut line 162 of the flame-retardant layer 160, the provisional cut line 162 of the flame-retardant layer 160 may be formed to be greater than the second hole 142 of the base layer 140, and the second hole 142 of the base layer 140 may be formed to be greater than the first hole 122 of the fireproof layer 120. Accordingly, gas or flames generated internally can be effectively discharged, and the phenomenon of gas or flames being reversely introduced from the outside can be minimized, and thus it is possible to stably deal with thermal runaway occurring within the battery pack BP.

Meanwhile, the venting parts 110 formed in the layers 120, 140, 160, and 180 of the cover panel 100 may have the same shape as illustrated in FIG. 1. If the venting parts 110 have different shapes, smooth discharge of gas or flames generated during thermal runaway may be hindered. Therefore, by forming the venting parts in the same shape but with different sizes, reverse inflow of gas or flames from an adjacent battery cell 900 or battery module 700 can be prevented, and at the same time, smooth discharge of gas or flames emitted from the battery cell 900 or battery module 700 can be ensured. The venting part 110 may be formed in an oval shape with a greater length in the longitudinal direction of the cover panel 100 as illustrated, but if gas or flames can be discharged efficiently by forming the venting parts 110 in the same shape in the layers 120, 140, 160, and 180, the venting part 110 may be formed in various shapes such as a circle, a square, and a rectangle in addition to the oval shape.

Meanwhile, the battery module cover according to the present disclosure can be applied to a battery pack BP of various vehicles V such as internal combustion engine vehicles, electric vehicles, hybrid vehicles, and fuel cell vehicles as shown in FIG. 9, and in addition to the vehicles V, can be applied to battery packs BP of various fields such as an industrial energy storage system (ESS), a household ESS, and small battery packs.

Although the present disclosure has been described above with reference to preferred embodiments, it will be understood by those skilled in the art that various modifications and changes may be made to the present disclosure without departing from the idea and scope of the present disclosure as set forth in the following claims.

## Claims

1. A battery module cover comprising:
a cover panel formed by stacking a plurality of layers and having a venting part for venting gas or flames in a battery cell; and
a fastening pin penetrating the cover panel at a point avoiding the venting part, being combined with a fixing part to provide a bonding force between the plurality of layers of the cover panel, and having an end extending toward a pack lid to support the pack lid.

2. The battery module cover of claim 1, wherein the pack lid has a fireproof cover bonded to a lower side of the pack lid facing the inside of a battery pack, and the end of the fastening pin penetrating the cover panel and combined with the fixing part extends toward the fireproof cover to support the fireproof cover,
wherein a plurality of fastening pins is provided to be spaced apart from each other at points avoiding the venting part, and an end of each fastening pin comes into contact with the inside of the pack lid to support the pack lid.

3. The battery module cover of claim 1, wherein the fixing part is located on the outside of the cover panel and is combined with the fastening pin penetrating the cover panel such that the cover panel is in close contact between the fixing part and the fastening pin.

4. The battery module cover of claim 1, wherein one end of the fastening pin protrudes to a point between the cover panel and the battery cell in a state in which the one end is inserted into the inside of the cover panel, and is covered with an insulating adhesive.

5. The battery module cover of claim 1, wherein the fastening pin is a bolt and the fixing part is a nut.

6. The battery module cover of claim 1, wherein a plurality of fixing parts is provided on both sides of the cover panel, and the fastening pins penetrating the cover panel are combined with the plurality of fixing parts.

7. The battery module cover of claim 1, wherein the fixing parts are bonded to the ends of the fastening pins penetrating the cover panel to support the pack lid.

8. The battery module cover of claim 1, wherein a plurality of venting parts is formed to be spaced apart from each other in the cover panel, the fastening pins are positioned between the plurality of venting parts,
wherein the plurality of venting parts formed in the cover panel includes outermost venting parts formed adjacent to an edge of the cover panel, and a plurality of fastening pins is provided at points outside the outermost venting parts.

9. The battery module cover of claim 1, wherein the fixing part is positioned between the cover panel and the battery cell, and is combined with the fastening pin penetrating the cover panel from the outside of the cover panel, thereby providing a bonding force between the plurality of layers of the cover panel.

10. The battery module cover of claim 1, wherein the fastening pin penetrating the cover panel is combined with the fixing part on the inside of the cover panel, and the fastening pin and the fixing part are covered with an insulating adhesive.

11. The battery module cover of claim 1, wherein the fixing part is disposed on the inside of the cover panel and is covered with an insulating adhesive while being combined with an end of the fastening pin penetrating the cover panel.

12. The battery module cover of claim 1, wherein the cover panel is formed by sequentially stacking
a fireproof layer,
a base layer,
a flame-retardant layer, and
a support layer from the inside facing the battery cell toward the outside of the cover panel,
wherein the venting part includes
a first hole formed in the fireproof layer,
a second hole formed in the base layer at a position corresponding to the first hole,
a provisional cut line formed in the flame-retardant layer at a position corresponding to the second hole, and
a third hole formed in the support layer a position corresponding to the provisional cut line.

13. The battery module cover of claim 12, wherein the third hole of the support layer is larger in size than the provisional cut line of the flame-retardant layer, the provisional cut line of the flame-retardant layer is larger in size than the second hole of the base layer, the provisional cut line of the flame-retardant layer is cut and opened when gas or flames are generated inside a battery module to form a venting hole,
wherein the first hole, the second hole, the third hole, and the provisional cut line constituting the venting part are formed in the same shape.

14. A battery pack comprising the battery module cover of claim 1.

15. A vehicle comprising the battery pack of claim 14.
